# EUROPEAN PATENT APPLICATION

(11) **EP 1 852 188 A1**
(43) Date of publication of application: **07.11.2007**
(21) Application number: 07008658.2
(22) Date of filing: 27.04.2007
(51) Int. Cl.: B02C 18/22, B02C 18/00

(54) **Perfectioning of the automatic assembly for trituration and extracting materials of solid mass from fluids coming from sewage systems**

(30) Priority: 05.05.2006 IT UD20060119
(71) Applicant: ASIA di Zanette Attilio, 33077 Sacile PN (IT)
(72) Inventor: Zanette, Attilio, 33077 Sacile (Pordenone) (IT)
(74) Representative: Cragnolini, Sergio

(57) **Abstract**

The present invention refers to an automatic assembly for trituration and extracting solid materials (9) from fluids (4) coming from sewage systems (1). The assembly is inserted in a tank (2) for collecting the slurry (4.1), provided with an outlet (3), and it is placed at a level higher than that of the outlet. It comprises a tubing for draining (5) in direct connection with the sewage (1), which is connected with the triturator (6) to which the solid material to be crushed is moved, subsequently extracted through the vertical tube (7) with an adequate oleo-dynamic cylinder (10) having a coaxial body (10.1) and a piston (10.2). The material (9), having reached the higher level, is pushed onto the collecting chute (13) for evacuation by means of another oleo-dynamic cylinder (11) with a head (12).

## Description

### Field of application

The present invention refers to several perfectioning steps for the automatic assembly for triturating and extracting materials of solid mass from fluids coming from sewage systems, which improve the subsequent water treatment and simultaneously permit a more regular functioning of the triturator, substantially reducing interventions by the users for the cleaning thereof and of the grids.

In plants for the treatment of drain water coming from civil or industrial sewage systems, it is important, before passing this water to the decanting tanks designed for this purpose, to extract the solids, such as fabrics, diapers, trash, rags, clothes etc., in order to avoid clogging in the tubes of said plants. To this purpose, the present invention intervenes with the known systems and means of automation with the aim of a constant and continuous extraction of such solids which are entrained in the sewage fluids, by means of a complex of mechanical automated elements which perform a first drainage of the fluids and a subsequent trituration of the solid materials, conveying them out separately and automatically to be treated, if applicable. Thus, the sewage water does not contain large solids and is therefore easy to be treated from an ecological point of view.

### State of the art

In the current state of the art, in the treatment of sewage water, various devices for the separation of solid parts from the liquids are known. One of these is the triturator developed by the ASIA company by Zanette Attilio (Italian patent no. 1.266.681, filed January 12, 1994), where the use of special screw conveyors to convey solids out from the sewage liquids was envisaged. This automated solution greatly reduced the maintenance efforts and the manual interventions to clean the transition paths of the solids in comparison to the technical solutions known at that time, which consisted in draining racks provided for this purpose or in the use of more decanting tanks.

The long-term use of this invention led to inconveniences, in particular with fabrics, rags and fibrous materials, which got caught in the helices of the screw conveyors and the external cover of the container, causing blockage of the axial rotation of the screw conveyors. Therefore, various maintenance interventions to manually extract these materials became necessary.

### Objective of the invention

For this reason, we wanted to overcome the inconveniences presented by the known technologies and to carry out several perfectioning steps for the automatic trituration assembly in order to render said assembly more efficient in terms of automation and to greatly reduce the maintenance interventions. To this end, the trituration assembly presents the characteristics below in order to:
- implement a first effective separation of the solid part from the liquid one by means of a system for draining and displacing the solid part repeatedly and automatically in order to facilitate the draining of the liquid or of the smaller solid parts;
- implement trituration of the solid materials in order to reduce their volume, by means of special profiled blades which perform an action of tearing and simultaneously of moving solid materials for their definitive evacuation;
- implement a repeated and automatic external evacuation of the material crushed in this manner in order to definitively separate it from the sewage fluid;
- implement the linear separation of the solid materials from the liquid ones by the use of automatically driven hydraulic pistons;
- implement, at the various points of movement of the solid part, suitable windows or hatches for manual intervention and/or for cleaning means with pressurized water jets in order to clear any cloggings or incipient cloggings of the transition passages for said materials;
- implement an assembly for the trituration of solid materials coming from sewage water, automated in the different phases of operation and driven by known means of computerized programming and/or other equivalent means.

### Summary of the invention

The objectives of the invention are achieved according to the features of the main claim and/or of any other claim referred to in this patent application, by the implementation of perfectioning steps for the assembly for the automatic trituration and extracting of solid materials from sewage fluids.

The perfectioning steps regard various parts of the triturator assembly: the horizontal draining pipe with displacement of the collected solid part towards the triturator by a particular automatically driven hydraulic piston; the triturator with blades for trituration the coarser and/or longer parts to parts with reduced dimensions; a vertical assembly for extracting crushed materials, using an oleo-dynamic piston operating within a cylindrical tubing; and finally an evacuator, also controlled by an oleo-dynamic cylinder which pushes the solid material towards a collecting chute for its definitive separation from the liquid part which will be treated separately. The trituration equipment is automated by means of systems known to persons skilled in the art and works autonomously so that it does not require the constant presence of the operators.

The trituration assembly works serially or in parallel with the plant for evacuation of the dirty sewage water and is arranged in the interior of a tank where it is directly connected to the incoming sewage fluid line at a level above that of discharge of said tank. This is to aid draining and separation of the liquid part from the solid one.

The first element, as noted before, is the tubing for draining, positioned horizontally and directly connected to the incoming sewage fluid line. The pipe is perforated on the lateral surface and is of the rectilinear type. On one end, the use of an oleo-dynamic piston is intended which pushes the solid material collected in its interior towards the other end. The round cylinder head is equipped with peripheral wire brushes for cleaning the surface of the perforated pipe. The body of the cylinder is protected by a sheet iron pipe without holes, having a smaller diameter than the pipe containing the drain. Behind the cylinder head, two radial guiding blades are provided, positioned at an angle which is suitable and sufficient for receiving and conveying the material coming from the sewage flow during the forward and backward movement of the piston. The material which collects in front of the piston head is pushed forward and conveyed towards the triturator, making it fall down from the top by means of an appropriate bend of 90°. The tubing for draining provides in several places hatches for the inspection or for the disentaglement, and/or points connected to the water supply for causing pressurized water to flow and for making any solid parts advance which have remained along the passage. An automatic gate valve operates on the outlet of the tubing for draining for regulating the flow of material to the triturator.

The triturator consists in a closed cylinder of low height, positioned vertically and with an axis of rotation of the internal blades which is vertical as well. Its inlet faces the higher base whereas the outlet is positioned horizontally and tangentially to the lateral surface.

The internal especially profiled and curved trituration blades are provided at their ends with two toothed tips and an arc along the entire height of the triturator, contacting appropriate fixed combs arranged on the internal surface of said triturator. Their purpose is to crush the solid parts and to cut up the long solid parts, such as rags, parts of clothes, fabrics etc.; at the same time, they convey the material crushed in this manner to unitary volume towards the accumulator and the automatic extractor.

The latter consists of a cylindrical vertical tube inside which runs an automatic hydraulic piston, driven from the top, whose stroke from the bottom to the top (and vice versa) carries the crushed solid material which has been collected and comes from the triturator to the outside for its normal evacuation.

The solid material, when it reaches the upper level, supported by the head of the vertical cylinder, is pushed laterally by a suitable hydraulic driving means onto an appropriate collecting chute for the definitive evacuation.

The trituration assembly which is the subject matter of the present invention can be implemented with a spatial arrangement different from the one described above for adaptation to the requirements of the various types of sewage treatment plants.

The present invention is advantageous and overcomes the inconveniences encountered by the systems known, guaranteeing a higher a degree of automation and a lower number of maintenance interventions in the assembly for trituration, greatly increasing its working efficiency.

### Explanation of the drawings

A solution according to the present invention is represented by way of preferential, but not limiting, example in the three enclosed sheets of figures, wherein:

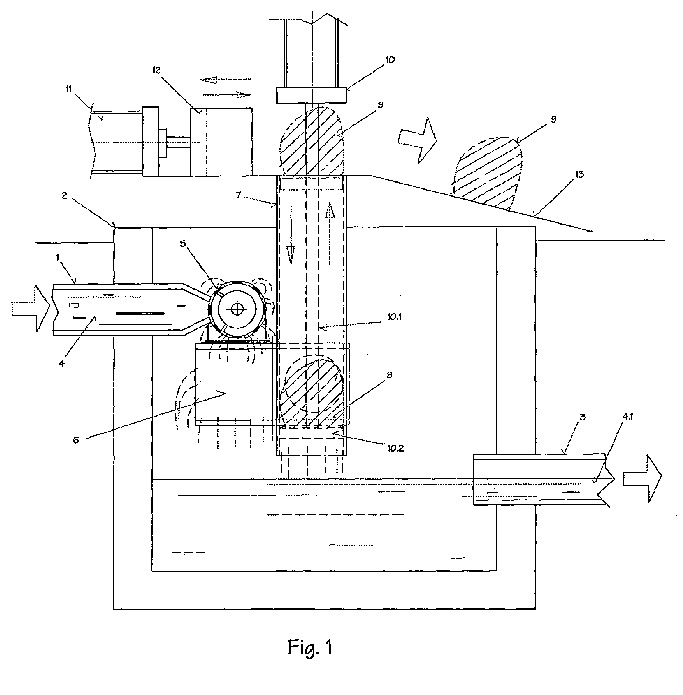

- Figure 1 shows, as a cross-sectional view, the assembly for trituration solid materials coming from sewage fluids, placed inside a suitable tank where the liquid is first treated by separating the liquid part from the solid one. The latter is crushed for facilitating its collection and the definitive separation and evacuation;

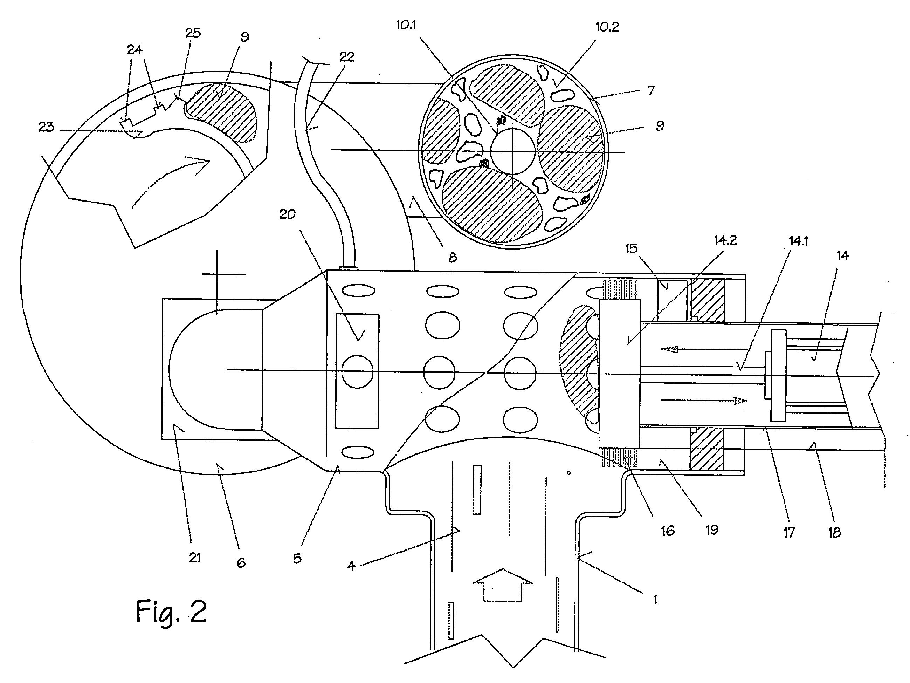

- Figure 2 shows, as a plan view in partial cross-section, the trituration assembly from the point of receiving the material coming from the sewage to the tubing for extracting the crushed solid part;

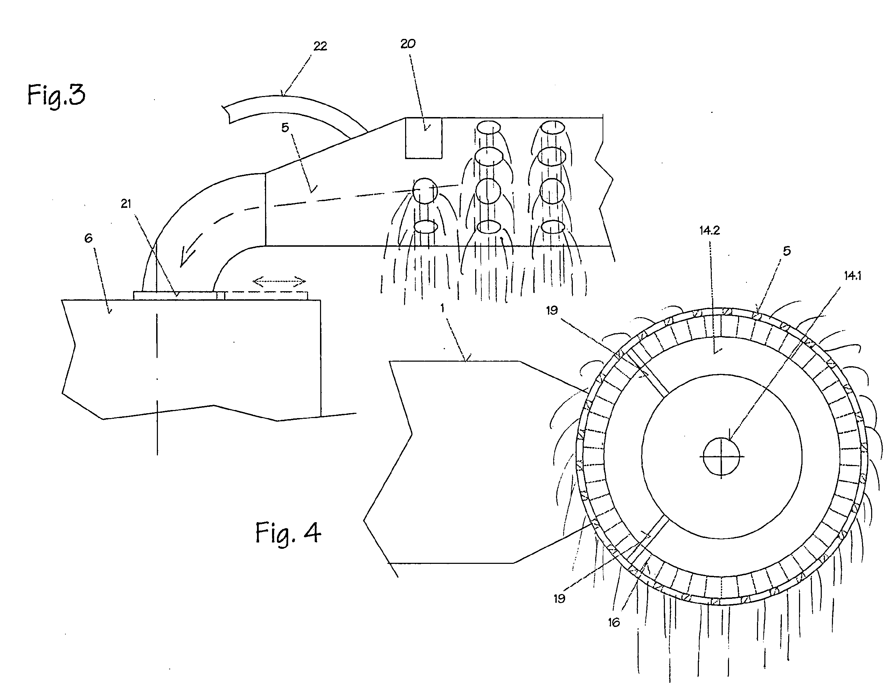

- Figure 3 shows, as a side view, the point of connection between the first tubing for receiving the material, the drain and the cylindrical triturator, emphasizing the automatic gate valve regulating the flow of the solid material inside the triturator;
- Figure 4 shows, as a cross-sectional view, the pipe for draining and for receiving the material coming from the sewage, emphasizing the details of the oleo-dynamic piston for pushing the solid material.

As can be seen from the enclosed figures, the assembly for trituration the solid parts collected and coming from the civil or industrial sewage fluids (4) or waste waters is enclosed in a treatment tank (2), where it is fed by a tubing (1) converging with said assembly, placed at a higher level providing for an outlet tube (3) for the separated liquid (4.1), which is placed at a lower level for normal evacuation by gravity or forced evacuation by suitable aspiration pumps.

The fluid (4) coming from the sewage is composed of liquid and entrained solids of any type and size. Obviously it is necessary, in order to avoid entanglements within the tubes for fluid treatment, to crush any bulky pieces which are present by accident; to this end, the fluid is first conducted into the tubing (5) - the so-called tubing for draining -, where the separation between liquid and bulky solid material of large dimension is performed. The special tubing is positioned horizontally and consists of a cylindrical tube, whose external surface is perforated with holes of appropriate dimensions in order to permit the draining of the liquid and the passage of small pieces of solid material. In this manner, a separation of solid materials of large dimensions takes place. The tubing (5) has at its one end an automated oleo-dynamic cylinder (14), with a piston body (14.1) and a piston head (14.2), for pushing the accumulated solid material in rectilinear direction to the other end, where it is then conveyed to the bottom of the triturator. On its lateral surface, the piston (14.2) has a special brush (16) for cleaning the inner surface of the tubing (5) while it moves back and forth. In addition, it has on its rear portion a protecting tube (17) with suitable sealing elements of a diameter which is smaller than the diameter of the piston in order to avoid the escape of liquid in the rear portion or possible entanglements. In the rear portion of the piston, two directional, rectilinear, longitudinal blades (18) are also provided, positioned radially with a slope which is ideal for covering the zone of connection to the sewage tubing (1). Said blades are advantageous because they prevent an entanglement during the forward and return strokes of said piston. Larger lateral indentations (19) are also provided for avoiding entanglements. On the outer surface of the tubing (5), small access hatches or windows (15) (20) are provided for interventions of disentanglement, if necessary, or for normal maintenance. Furthermore, the use of a tubing of pressurized water (22) is intended which is employed automatically for washing out any materials which block the outlet of said tubing.

Between the outlet of the tubing for draining (5) and the triturator (6), the use of an automatic gate valve (21) which regulates the flow of the collected solid material (9) is intended.

The triturator (6) is a vertically positioned cylindrical device inside of which there are special blades (23), mounted on a vertical rotational central axis, and which is driven by suitable motor means. The ends of the blades have peripheral teeth (24) and sloped curves (25) which run along the entire height of the triturator and whose purpose it is to push bulky objects against the stops of the inner surface of the triturator for trituration them, conveying them subsequently through the horizontal outlet tubing (8) towards the vertical tubing (7) for extraction of the solid objects (9).

The latter is served by an oleo-dynamic cylinder (10), placed coaxially to said tube, with body (10.1) and a piston (10.2) having a stroke from a position on a lower level to the one of the triturator up to an optimum height external to the treatment tank (2). The piston (10.2) collects the crushed solid material (9) and conveys it to the outside where another automatic oleo-dynamic cylinder system (11) with a suitable mobile head (12) pushes it onto a collecting chute (13).

Naturally, the invention is not limited to the embodiment described above, in addition to which other forms and other embodiments can be envisaged, and the details of the embodiment can in any case vary without departing from the scope of the invention as it is disclosed and as it is claimed below.

## Claims

1. Perfectioning of the automatic assembly for trituration and extracting solid materials from sewage fluids, **characterized in that** the following components in cooperation and in an automated manner, positioned inside a collection tank on a level higher than that of the liquid, perform the recovery and the separation of the solid materials entrained in the sewage fluids. The complex comprises the following interconnected components:
- a tubing for draining (5), horizontal, of cylindrical shape with a lateral perforated surface for enabling the passage of small pieces of solid material and of the liquid, connected and supplied directly by the sewage tubing (1). Inside said tubing, there runs a piston driven by an oleo-dynamic automatic cylinder, with rectilinear stroke from one end to the other. Said piston pushes the solid material with large particle size, which collects inside said pipe, towards the triturator;
- a triturator (6) of cylindrical shape and low height, positioned with its central vertical axis at a lower level than that of the tubing for draining (5). Said triturator has profiled blades (23), driven by a suitable motor means, with peripheral teeth (24) and (25) whose function it is to crush the materials of large volume and to convey them towards the device for definitive extraction;
- a tubing for extraction of the solid material (7), positioned vertically and of cylindrical form, served by a vertical oleo-dynamic cylinder (10), with coaxial body (10.1) and with a piston (10.2) having a service stroke from one position on a lower level to the one of the triturator (6), up to a height above that of the external level. The back of the piston (10.2) collects the solid material coming from the triturator and automatically conveys it to the outside;
- an automatic oleo-dynamic cylinder device (11), horizontal, with a pushing head (12), pushes the solid material (9) which reaches the upper height towards the definitive collecting chute.
All movements of the individual components of the trituration assembly are driven automatically for the purpose of coordinating and optimizing the various working phases.

2. Perfectioning of the automatic trituration assembly according to Claim 1, **characterized in that** the perforated tubing (5) has, along its lateral external surface, one or more windows or hatches for access to the inside for interventions of maintenance and/or of disentanglement.

3. Perfectioning of the automatic trituration assembly according to Claim 1, **characterized in that** one or more of the elements forming the trituration assembly is/ are supplied automatically and/or manually by one or more tubings of pressurized water for enabling internal washing and/or disentanglement.

4. Perfectioning of the automatic trituration assembly according to Claim 1, **characterized in that** the arrangement and the connection of the individual components in the trituration assembly can be different from the one indicated and can assume any spatial orientation.

5. Perfectioning of the automatic trituration assembly according to Claim 1, **characterized in that** said trituration assembly envisages the dimensional screening of the solid materials contained in the sewage fluids by means of the dimensional variation of the draining holes of the tubing (5) with suitable automatic means and/or by manual regulation.

6. Perfectioning of the automatic trituration assembly according to Claim 1, **characterized in that** the triturator (6) has adjustable blades for the purpose of varying the volumetric particle size of the crushed solid materials.

7. Perfectioning of the automatic trituration assembly according to Claim 1, **characterized in that** it is particularly suitable in civil and/or industrial sewage treatment plants of large dimensions, and of small dimensions for a first treatment before the discharge of slurry in the actual sewage systems.
